(19) **Europäisches Patentamt / European Patent Office / Office européen des brevets**

(11) **EP 3 040 174 A1**

(12) # EUROPEAN PATENT APPLICATION
published in accordance with Art. 153(4) EPC

(43) Date of publication:
06.07.2016 Bulletin 2016/27

(51) Int Cl.:
*B29C 33/68* (2006.01)      *B29C 55/28* (2006.01)
*B32B 27/00* (2006.01)      *B32B 27/32* (2006.01)
*C08J 7/00* (2006.01)

(21) Application number: 14844773.3

(22) Date of filing: 25.08.2014

(86) International application number:
PCT/JP2014/072176

(87) International publication number:
WO 2015/037426 (19.03.2015 Gazette 2015/11)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 10.09.2013 JP 2013187494
07.11.2013 JP 2013231290

(71) Applicant: **Asahi Kasei Chemicals Corporation**
**Tokyo 101-8101 (JP)**

(72) Inventors:
• **KASAMATSU Chika**
  **Tokyo 101-8101 (JP)**
• **SUE Kenichiro**
  **Tokyo 101-8101 (JP)**
• **MARUYAMA Mutsuhiro**
  **Tokyo 101-8101 (JP)**
• **MATSUKI Yutaka**
  **Tokyo 101-8101 (JP)**

(74) Representative: **D Young & Co LLP**
**120 Holborn**
**London EC1N 2DY (GB)**

(54) **RELEASE FILM, METHOD FOR MANUFACTURING MOLDED ARTICLE, SEMICONDUCTOR COMPONENT, AND REFLECTOR COMPONENT**

(57)     In the release film of the present invention, each of thermal shrinkage ratios in an MD direction and a TD direction at 120°C is not less than 5%.

**Description**

**Technical Field**

The present invention relates to a release film, a method for manufacturing a molded article using the release film, and a semiconductor component and a reflector component obtained by the manufacturing method.

**Background Art**

In recent years, in association with sophistication and miniaturization of electronic devices and their rapid prevalence, smaller components as electronic components to be incorporated in such devices have been required to be provided in large numbers inexpensively. Meanwhile, in a step of thermally processing electronic components, it is required that smaller shaped components can be efficiently produced in large numbers with high productivity. For example, in LED components, their package forms have changed from the larger cannonball type to the small thin reflector type. Furthermore, the overmold type, in which a large number of LED chips are mounted on a substrate followed by collective sealing and individualization, is expected to dominate the mainstream. Under such circumstances, for release films used in the step for thermally processing these electronic components, higher processability, such as higher moldability and higher releasability, has been required increasingly.

Conventionally, a tetrafluoroethylene-ethylene-based copolymer film has been suggested as a release film used at the time of molding a printed substrate (Patent Literature 1).

A release film that is formed of a composition containing a polymer of which 4-methyl-1-pentene content is 80% by mass or more has been also suggested, wherein the melting point of the composition is from 170 to 240°C, and the semi-crystallization time is from 70 to 220 seconds (Patent Literature 2).

Alternatively, as a release film used at the time of molding a printed substrate, a release film produced by applying a release layer on a base film has been suggested, wherein the base film is produced by mixing 25 to 400 parts by mass of a polyethylene-based resin to 100 parts by mass of ethylene-based copolymer rubber thereby to provide a resin composition; extrusion molding the resin composition to thereby provide a film; and crosslinking the film by irradiating the film with ionizing radiation (Patent Literature 3).

**Citation List**

**Patent Literature**

    Patent Literature 1: Japanese Unexamined Patent Application Publication No. 2001-206913
    Patent Literature 2: Japanese Unexamined Patent Application Publication No. 2006-70252
    Patent Literature 3: Japanese Unexamined Patent Application Publication No. 2012-66447

**Summary of Invention**

**Technical Problem**

However, it cannot necessarily be said that any of the above mentioned release films is satisfactory.

Specifically, since the tetrafluoroethylene-ethylene-based copolymer film of Patent Literature 1 and a film of polytetrafluoroethylene (PTFE), ethylene-tetrafluoroethylene copolymer (ETFE) or polyimide does not thermally shrink at the molding temperature, such films may involve wrinkles when set on a mold and may fail to accurately reproduce the shape of the mold.

As for the release film of Patent Literature 2, since the elastic modulus of the film at the time of molding is too high, wrinkles are formed on molded articles in a step of thermally molding electronic members and the like, and thus, the release film may fail to sufficiently reproduce the shape of the mold.

Also, as for the film of Patent Literature 3, since the film does not shrink at all at the time of heating molding, wrinkles are formed and the like when the film is set on the mold, and thus, the film may fail to sufficiently reproduce the shape of the mold.

In this manner, as for the conventional release films, in a general thermal processing step, since such release films have poor flexibility, and moreover do not moderately shrink, the release film cannot adequately adhere to the mold shape of the mold and thus, for example, form wrinkles in molded articles, which is problematic.

Therefore, it is an object of the present invention to provide a release film which can improve the moldability in thermal molding, a method for manufacturing a molded article by using the release film, and a semiconductor component and a reflector component obtained by the manufacturing method.

**Solution to Problem**

The present inventors have made extensive investigations to solve the aforementioned problems and have thus completed the present invention. That is, the present invention is as follows.

[1] A release film, wherein each of thermal shrinkage ratios in an MD direction and a TD direction at 120°C is not less than 5%.
[2] The release film according to [1], wherein each of thermal shrinkage ratios in an MD direction and a TD direction at 110°C is not less than 2%.
[3] The release film according to [1] or [2], comprising a release layer and a substrate layer, wherein the substrate layer comprises a polyolefin resin, and a melting point of the substrate layer measured by DSC is from 128 to 210°C.
[4] The release film according to [3], wherein the polyolefin resin of the substrate layer is crosslinked; in each of stress-strain curves in an MD direction and a TD direction of the release film at 120°C, there is no yield point, and a ratio of a load B at 100% elongation to a load A at 50% elongation, B/A, is not less than 1.5; and each of thermal shrinkage forces in an MD direction and a TD direction at 120°C is not more than 0.40 N/cm.
[5] The release film according to [3] or [4], wherein the release layer comprises a fluorine-based compound.
[6] The release film according to any one of [3] to [5], wherein the polyolefin resin of the substrate layer is crosslinked by ionizing radiation.
[7] A method for manufacturing a molded article, comprising: a step of fixing the release film according to any one of [1] to [6] on a mold; a step of shrinking the release film on the mold to remove wrinkles of the release film; a molding step of supplying a resin into the mold to mold the resin; and a step of peeling the release film off.
[8] The method for manufacturing a molded article according to [7], further comprising a step of placing a substrate on which a semiconductor chip is mounted in the mold, wherein the semiconductor chip is sealed with the resin in the molding step.
[9] The method for manufacturing a molded article according to [7], further comprising a step of placing a leadframe in the mold, wherein the resin is molded into the leadframe in the molding step.
[10] A semiconductor component manufactured by the method for manufacturing a molded article according to [8].
[11] A reflector component manufactured by the method for manufacturing a molded article according to [9].

**Advantageous Effects of Invention**

The release film according to the present invention can increase the moldability in thermal molding compared with conventional ones by having the above mentioned thermal shrinkage ratio. The method for manufacturing a molded article by using the release film according to the present invention can eliminate a mold cleaning step in manufacturing a molded article in which high productivity is required as well as can dramatically reduce defects such as wrinkles of the release film to thereby significantly increase the productivity.

**Description of Embodiments**

Hereinbelow, embodiments of the present invention will be described in detail. It should be noted that the present invention is not intended to be limited to the following embodiment, but can be modified for implementation in various ways within its spirit and scope.
In the release film according to the present embodiment, each of the thermal shrinkage ratios in the MD direction (longitudinal direction, flow direction) and the TD direction (transverse direction, width direction) at 120°C is not less than 5%. Additionally, it is preferred that each of the thermal shrinkage ratios in the MD direction and the TD direction at 110°C be not less than 2%. The thermal shrinkage ratio is measured in compliance with the measuring method ASTM D2732. Additionally, the aforementioned "each of thermal shrinkage ratios in the MD direction and the TD direction" is synonymous with the "both of thermal shrinkage ratios in the MD direction and the TD direction".
In the case where the thermal shrinkage ratio is less than 5% at 120°C, when a film is set on a mold followed by conducting evacuation, the film does not accurately conforms to the mold to form wrinkles on the film, and wrinkles are formed also on the molded article. If the thermal shrinkage ratio is not less than 5%, a film is set on the mold without wrinkles, and thus, it is possible to sufficiently reproduce the shape of the mold.
It is preferred that the lower limit of the thermal shrinkage ratio at 120°C be 5%. It is preferred that the upper limit be 50%, it is more preferred that the upper limit be 30%, and it is further preferred that the upper limit be 20%. It is possible to freely combine these upper and lower limits to constitute the numerical range. For example, it is preferred that the thermal shrinkage ratio be from 5 to 50%, it is more preferred that the thermal shrinkage ratio be from 5 to 30%, and it is further preferred that the thermal shrinkage ratio from be 5 to 20%. If the thermal shrinkage ratio is not more than 50%, malfunctions are further less prone to occur in the step of setting a film on the mold and conducting evacuation.

In the case where the thermal shrinkage ratio is not less than 2% at 110°C, when a film is set on the mold followed by conducting evacuation, wrinkles are less prone to be formed on the film, since the film accurately conforms to the mold, and it is thus possible to more sufficiently reproduce the shape of the mold.

It is preferred that the lower limit of the thermal shrinkage ratio at 110°C be 2%. It is preferred that the upper limit be 30%, it is more preferred that the upper limit be 20%, and it is further preferred that the upper limit be 10%. It is possible to freely combine these upper and lower limits to constitute the numerical range. For example, it is preferred that the thermal shrinkage ratio be from 2 to 30%, it is more preferred that the thermal shrinkage ratio be from 2 to 20%, and it is further preferred that the thermal shrinkage ratio from be 2 to 10%. If the thermal shrinkage ratio is not more than 30%, malfunctions are further less prone to occur in the step of setting a film on the mold and conducting evacuation.

The release film according to the present embodiment is, for example, a multilayer film comprising at least two layers, i.e., a release layer and a substrate layer containing a polyolefin resin, and may have a structure consisting of comprising two layers, i.e., a release layer and the substrate layer.

It is preferred that the lower limit of the melting point of the substrate layer measured by DSC (in the case where there are a plurality of peaks, the melting point shall be the maximum value) be 128°C. It is preferred that the upper limit be 210°C, it is more preferred that the upper limit be 160°C, and it is further preferred that the upper limit be 150°C. It is possible to freely combine these upper and lower limits to constitute the numerical range. For example, it is preferred that the melting point be from 128 to 210°C, it is more preferred that the melting point be from 128 to 160°C, and it is further preferred that the melting point be from 128 to 150°C. If the melting point is not less than 128°C, malfunctions are less prone to occur in the step of setting a film on the mold and conducting evacuation. Alternatively, if the melting point is not more than 210°C, moderate shrinkage is prone to occur at the molding temperature, and the molded article is less prone to involve wrinkles.

The substrate layer contains, for example, a polyolefin resin as its main component. Polyolefin resins are a polymer synthesized from a simple olefin or an alkene as the unit molecule. Examples of the polyolefin resin include polyethylene-based resins, polypropylene-based resins, polyolefin-based polymer alloys, polybutene-based resins, and polymethyl pentene resins.

Examples of the above mentioned polyethylene-based resin include polyethylene and ethylene-$\alpha$-olefin copolymers.

Examples of the polyethylene include high density polyethylene, medium density polyethylene, low density polyethylene, and very low density polyethylene. It is possible to manufacture high density polyethylene by a generally known method, such as the Phillips process, the standard process, and the Ziegler process. Examples of moderate density polyethylene include linear moderate density polyethylene. Examples of low density polyethylene include linear low density polyethylene (LLDPE) and high-pressure-processed low density polyethylene. It should be noted that high-pressure-processed low density polyethylene is low density polyethylene manufactured by the so-called high pressure process (bulk polymerization process). Examples of the very low density polyethylene include linear very low density polyethylene (VLDPE).

As the aforementioned ethylene-$\alpha$-olefin copolymer, copolymers of ethylene and an $\alpha$-olefin having 3 to 20 carbon atoms is preferred, copolymers of ethylene and an $\alpha$-olefin having 3 to 12 carbon atoms is more preferred. Examples of the $\alpha$-olefin include propylene, 1-butene, 1-pentene, 1-hexene, 1-octene, and 4-methyl-1-pentene, and these can be used singly or two or more of these can be used in combination.

Additionally, as the aforementioned ethylene-$\alpha$-olefin copolymer, copolymers of ethylene and at least one comonomer selected from propylene comonomers, butene comonomers, hexene comonomers, and octene comonomers are easily available in general, and can be suitably used.

As the polyethylene-based resin, copolymers of ethylene and an $\alpha$-olefin (propylene, 1-butene, 1-pentene, 1-hexene, 1-octene, 4-methyl-1-pentene, 3-methyl-1-pentene, 1-decene, 1-dodecene, 1-tetradecene, 1-hexadecene, 1-octadecene, 1-eicosane, or the like) are preferred, and the polyethylene-based resin may be ternary copolymers of ethylene and two types of $\alpha$-olefins (propylene, 1-butene, 1-pentene, 1-hexene, 1-octene, 4-methyl-1-pentene, 3-methyl-1-pentene, 1-decene, 1-dodecene, 1-tetradecene, 1-hexadecene, 1-octadecene, 1-eicosan, or the like) (for example, ternary copolymers of ethylene, propylene, and other $\alpha$-olefin). These copolymers may be in any form, such as block copolymers and random copolymers. As the polyethylene-based resin, random copolymers of ethylene and propylene, random copolymers of ethylene and octene, and random copolymers of ethylene, propylene, and butene are preferred.

It is possible to polymerize a polyethylene-based resin by using a known catalyst, such as a single-site catalyst and a multi-site catalyst.

From the viewpoint of being further excellent in the shrinkability, it is preferred that the density of the polyethylene-based resin be not less than 0.935 g/cm$^3$, and it is more preferred that the density be not less than 0.940 g/cm$^3$. It is possible to appropriately regulate the shrinkability to thereby improve the mechanical adaptability of the release film by using a polyethylene-based resin of higher density.

It is preferred that the lower limit of the melt flow rate (MFR, 190°C, 2.16 kg) of the polyethylene-based resin be 0.5 g/10 min, it is more preferred that the lower limit be 0.8 g/10 min, and it is still more preferred that the lower limit be 1.0 g/10 min. It is preferred that the upper limit be 30 g/10 min, and it is more preferred that the upper limit be 25 g/10 min. It is possible to freely combine these upper and lower limits to constitute the numerical range. For example, from the viewpoint of being excellent in the processability of the release film, it is preferred that the melt flow rate be from 0.5 to 30 g/10 min, it is more preferred that the melt flow rate be from 0.8 to 30 g/10 min, and it is still more preferred that the melt flow rate be from 1.0 to 25 g/10 min.

As the polyethylene-based resin, it is possible to use a polyethylene-based copolymer in which the crystalline / amorphous structure (morphology) has been controlled in a nanometer order.

As the aforementioned polypropylene-based resin, polypropylene, propylene-$\alpha$-olefin copolymers and the like can be suitably used. It should be noted that, as the polypropylene-based resin, resins corresponding to the aforementioned polyethylene-based resin are excluded.

The propylene-$\alpha$-olefin copolymer refers to copolymers of propylene and an $\alpha$-olefin. As the propylene-$\alpha$-olefin copolymer, copolymers of propylene and an $\alpha$-olefin having 4 to 20 carbon atoms are preferred, and copolymers of propylene and an $\alpha$-olefin having 4 to 8 carbon atoms are more preferred. Examples of the $\alpha$-olefin having 4 to 20 carbon atoms herein include 1-butene, 1-pentene, 1-hexene, 1-octene, 4-methyl-1-pentene, 3-methyl-1-pentene, 1-decene, 1-dodecene, 1-tetradecene, 1-hexadecene, 1-octadecene, 1-eicosan, and the like, and these can be used singly or two or more of these can be used in combination.

As the propylene-$\alpha$-olefin copolymer, copolymers of propylene and at least one comonomer selected from ethylene comonomers, butene comonomers, hexene comonomers, and octene comonomers are easily available in general, and can be suitably used.

It is possible to polymerize a polypropylene-based resin by using a known catalyst, such as a single-site catalyst and a multi-site catalyst.

It is preferred that the lower limit of the density of the polypropylene-based resin be 0.860 g/cm$^3$, and it is more preferred that the density be 0.870 g/cm$^3$. It is preferred that the upper limit be 0.920 g/cm$^3$, and it is preferred that the upper limit be 0.915 g/cm$^3$, and it is still more preferred that the upper limit be 0.910 g/cm$^3$. It is possible to freely combine these upper and lower limits to constitute the numerical range. For example, from the viewpoint of being excellent in the elongation, it is preferred that the density be from 0.860 to 0.920 g/cm$^3$, it is more preferred that the density be from 0.870 to 0.915 g/cm$^3$, and it is still more preferred that the density be from 0.870 to 0.910 g/cm$^3$. These same types of polypropylenes may be used singly or in admixture.

It is preferred that the lower limit of the melt flow rate (MFR, 230°C, 2.16 kg) of the polypropylene-based resin be 0.3 g/10 min, it is more preferred that the lower limit be 0.5 g/10 min, and it is still more preferred that the lower limit be 0.8 g/10 min. It is preferred that the upper limit be 15 g/10 min, it is more preferred that the upper limit be 12 g/10 min, and it is still more preferred that the upper limit be 10 g/10 min. It is possible to freely combine these upper and lower limits to constitute the numerical range. For example, from the viewpoint of being excellent in the processability of the release film, it is preferred that the melt flow rate be from 0.3 to 15 g/10 min, it is more preferred that the melt flow rate be from 0.5 to 12 g/10 min, and it is still more preferred that the melt flow rate be from 0.8 to 10 g/10 min.

As the polypropylene-based resin, it is also possible to use polypropylene-based copolymers in which the crystalline / amorphous structure (morphology) has been controlled in a nanometer order.

As the aforementioned polypropylene-based resin, copolymers of propylene and $\alpha$-olefins, such as butene, hexene, and octene, and ternary copolymers of propylene and $\alpha$-olefins, such as butene, hexene, and octene can be suitably used. These copolymers may be in any form, such as block copolymers and random copolymers.

The aforementioned polypropylene-based resin may be not only resins polymerized with a catalyst such as Ziegler-Natta catalysts, but also resins polymerized with a metallocene catalyst and the like, and syndiotactic propylene, isotactic propylene, and the like can be used.

Alternatively, in the case where the base resin of the substrate layer contains the aforementioned polypropylene-based resin, it is preferred to use, as the base resin, a resin which is prepared by homogeneously finely-dispersing 50% by mass or less of a high-concentration rubber component based on the total amount of the polypropylene-based resin. Examples of the rubber component herein include ethylene-propylene rubber components (EPR).

Since polybutene-based resins are excellent particularly in the compatibility with polypropylene-based resin, it is preferred for a polybutene-based resin to be used in combination with a polypropylene-based resin with a purpose of adjusting the hardness and stiffness of the release film. It should be noted that, as the polybutene-based resin, resins corresponding to the aforementioned polyethylene-based resin and polypropylene resin are excluded. As the polybutene-based resin, a high-molecular-weight polybutene-based resin which is crystalline, which is a copolymer of a butene and an olefin-based resin having from 5 to 8 carbon atoms, and in which the content of butene in all the monomers constituting the polybutene-based resin is not less than 70 mol % can be suitably used.

It is preferred that the melt flow rate (MFR, 190°C, 2.16 kg) of the polybutene-based resin be from 0.1 to 10 g/10 min. Alternatively, it is preferred that the Vicat softening temperature be from 40 to 100°C. The Vicat softening temperature herein is a value measured in compliance with JIS K 7206-1982.

From the viewpoint of the flexibility, on the basis of the entire substrate layer, it is preferred that the content of the aforementioned polyolefin resin in the substrate layer be not less than 50% by mass, it is more preferred that the content be not more than 80% by mass, and it is still more preferred that the content be not more than 90% by mass.

The substrate layer may further contain any additives such as a known plasticizer, an ultraviolet absorber, an antioxidant, a colorant, an antistatic agent, a petroleum resin, mineral oil, various surfactants, an antiblocking agent, and an inorganic filler, in addition to the aforementioned polyolefin resin. The amount of the aforementioned additive to be added is usually from 0.1 to 5 % by mass on the basis of the entire substrate layer.

In the release film according to the present embodiment, it is preferred that the polyolefin resin as above be crosslinked. When used in the thermal molding step, such a release film has excellent heat resistance due to its crosslinking effect. Since the release film becomes likely to impart moderate elongation and shrinkability by being biaxially stretched, it further excels in the mold conformability. Additionally, such a release film also has excellent mold releasability in a post-treatment such as coating. Furthermore, due to crosslinking, the polyolefin resin does not melt and flow even in a thermal molding step at higher than the melting point of the polyolefin resin. Therefore, perforation or film breakage is less prone to occur, and flexibility so far unavailable can be exerted. Thus the film stably conforms to complex mold shapes, and it further excels in the mold reproducibility.

Examples of the crosslinking method include a method for irradiating the resin with ionizing radiation such as $\alpha$ rays, $\beta$ rays, gamma rays, neutron rays, or electron rays. Using ionizing radiation is preferred because the crosslinking component (so-called gel fraction) can be adjusted depending on the irradiation condition of the ionizing radiation.

The gel fraction is a proportion of the degree of crosslinking determined by a calculation expression described below. In the case of crosslinking using ionizing radiation, the degree of crosslinking depends on types of the resin and the environment of irradiation, but it is possible to control the gel fraction to a desired level by the irradiation density and irradiation intensity of the ionizing radiation.

In particular, when a polyolefin resin is used while controlling the irradiation conditions such as resin, irradiation temperature, and humidity, it is possible to allow the gel fraction to be within a certain range with the relatively good reproducibility.

For example, generally, in the case of low density polyethylene (LDPE), crosslinking starts at an irradiation density of 20 kGy, and the gel fraction increases as the irradiation density increases. Also, if the irradiation density exceeds 200 kGy, deterioration or degradation of the resin may occur, and controlling the desired gel fraction is important also in a sense of achieving the stability of physical properties.

It is preferred that the gel fraction of the substrate layer be from 1 to 80% by mass on the basis of the mass of the entire release film. In the case where the gel fraction is not less than 1% by mass, it is possible to obtain a sufficient crosslinking property, and to more effectively prevent the film from being perforated even in the case where the release film is used at a mold temperature equal to or higher than the melting point of the polyolefin resin before crosslinking. Alternatively, if the gel fraction is not more than 80% by mass, the thermal shrinkage force, which is a requirement property of the release film, is low, and the film appropriately shrinks and appropriately elongates. Thus, when set in a mold, the film is likely to accurately conform to the mold shape. It is preferred that the gel fraction be from 1 to 70% by mass, and it is more preferred that the gel fraction be from 1 to 65% by mass.

In the release film according to the present embodiment, the substrate layer containing the aforementioned polyolefin resin may be a single layer structure, or may be a multi-layer structure. Also, the resin of each layer of the substrate layer may be a single type resin or may be a mixed resin by blending and the like, as required.

It is preferred that the thickness of the substrate layer of the release film according to the present embodiment be from 5 to 2000 $\mu$m, it is more preferred that the thickness be from 10 to 1500 $\mu$m, and it is still more preferred that the thickness be from 15 to 800 $\mu$m. If the thickness is not less than 5 $\mu$m, from the viewpoint of being excellent in the workability, breakage or a problem in the intensity is less prone to occur in the case of coming into contact with an edge of something. Alternatively, if the thickness is not more than 2000 $\mu$m, the productivity is increased, and the reproducibility of the shape of the mold becomes better.

The release film according to the present embodiment comprises a release layer having a mold release function for molding materials (resin and the like). The release layer is provided on at least one side of the substrate layer. To conduct release not only from the molding material but also from the mold, it is preferred that the release film have a release layer on its both sides.

The release layer having a mold release function may contain a known compound such as a fluorine-based compound (fluorine-containing compound) or a silicone-based compound. It is possible to use a release layer composed of a fluorine-based compound or a silicone-based compound. Of silicone-based compounds, compounds of which affinity with a molded article is good may impair the mold releasability, and thus, fluorine-based compounds are more preferred.

The release film according to the present embodiment may include a single substrate layer and a single release layer, and also the film may include a plurality of substrate layers or may include plurality of release layers. For example, the release film according to the present embodiment may be a laminate of a skin layer / a core layer / a release layer or of a skin layer / a core layer / a skin layer / a release layer in this order. The "skin layer" herein refers to the outermost layer, and the "core" layer refers to the innermost layer. Also, the release film according to the present embodiment may further comprise a layer other than the substrate layer.

It is preferred that there be no yield point (elastic limit) in each of stress-strain curves (S-S curves) in the MD direction and the TD direction of the release film according to the present embodiment. A stress-strain curve is a curve of which ordinate indicates a load (N) and of which abscissa indicates elongation (%). The stress-strain curve is measured at 120°C in compliance with JIS K7127. When there is no yield point, a film elongates homogeneously when the film is set on a mold, and wrinkles are further less prone to be formed on a molded article, which is preferable.

Additionally, in the aforementioned stress-strain curve, it is preferred that a ratio of a load B at 100% elongation (load at 100% elongation) to a load A at 50% elongation (load at the time of 50% elongation) (B/A) at 120°C be not less than 1.5 in each of the MD direction and the TD direction. In the case where the ratio is not less than 1.5, the film elongates homogeneously, and it is possible to accurately reproduce the shape of a mold when the film is set on the mold. It is preferred that the ratio be not less than 1.55, and it is more preferred that the ratio be not less than 1.6.

Each of the thermal shrinkage forces of the release film according to the present embodiment at 120°C in the MD direction and the TD direction is preferably not more than 0.40 N/cm, and more preferably not more than 0.30 N/cm. The thermal shrinkage force is measured in compliance with the measuring method ASTM D2838. In the case where the thermal shrinkage force is not more than 0.40 N/cm, when the film is set on the mold followed by conducting evacuation, the thermal shrinkage force tends to be weaker than the force subjected to evacuation. Thus, the film can conform to the mold more accurately, wrinkles are less prone to be formed on the film, and wrinkles are also less prone to be formed on the molded article.

Hereinabove, the release film according to the present embodiment has been described. Subsequently, the method for manufacturing the release film according to the present embodiment will be described. However, the present invention is not limited only to the following embodiments.

Raw materials used for each layer are allowed to melt from several types of extruders, and each resin is coextruded from an annular die to thereby yield a tubular unstretched parison. For the tubular parison, there are a case where water is used as the cooling medium from outside, and a case where water is used as the cooling medium from outside while, from inside the tubular parison, the inner portion is furthermore allowed to be line with a cooling mandrel through which water is passed, to cool and solidify the tubular parison both from inside and outside to thereby quench and solidify the parison, and either of the methods may be used. This unstretched parison is subjected to crosslinking treatment by being irradiated with ionizing radiation (electron rays and the like).

Subsequently, the cooled and solidified tubular parison is introduced into a stretching machine, air is injected between rolls between which a speed difference is provided while a stretch-starting point is heated at between 80 and 250°C to perform stretching at a magnification of preferably 2 to 10 fold, of more preferably 3 to 7 fold in each of the MD direction and in the TD direction from the viewpoint of being excellent in the stretch stability. The stretch-starting point refers to a position which starts expansion in the TD direction by the internal pressure of bubbles.

Examples of the method for stretching a film according to the present embodiment include the single bubble inflation method, the double bubble inflation method, the triple bubble inflation method, and the tenter method, and from the viewpoint of homogeneous shrinkage in each of the MD direction and the TD direction, the inflation method is preferred. In this manner, the substrate layer is formed.

Next, a release layer is provided on this substrate layer. The release layer may be provided after heat setting, corona treatment, or plasma treatment for stabilizing the dimensions is conducted. Providing the release layer may be conducted by employing any of known methods.

Examples of the method for providing a release layer include coating of a barcoat such as (meth)acrylates represented by the structural formula $CH_2=C(R^1)-COO(CH_2)_{n1}-R^{f1}$ ($R^1$: a hydrogen atom or a methyl group, $n1$: an integer of 0 to 4, $R^{f1}$: a polyfluoroalkyl group or polyfluoroether group having 1 to 6 carbon atoms) and compounds having constituting units derived from the (meth)acrylates, perfluoropolyether (PFPE)-based compounds, PVDF, fluorine-based resins containing a perfluoroalkyl group; spray coating of silicone oil or a solution of a silicone-based resin; mixing an additive or resin which provides a silicone-rich function on the surface of a substrate layer by adding the additive or resin in a small amount; dry lamination of a polymethylpentene film; lamination of a single polymethylpentene resin or by coextrusion with a dry-blended layer; lamination by coextrusion with a fluorine-based resin such as ETFE; and lamination by dry lamination of a fluorine-based resin film such as ETFE which has been already made into a film, and the method for providing a release layer may be selected as appropriate depending on costs and performances. Lamination with other film and the like may be conducted. Also, a release layer may be laminated by coating treatment and dried. In the case where a release layer is provided by coating, from the viewpoint of being further excellent in the mold releasability, (meth)acrylates represented by the structural formula $CH_2=C(R^1)-COO(CH_2)_{n1}-R^{f1}$ ($R^1$: a hydrogen atom or a methyl group, $n1$: an integer of 0 to 4, $R^{f1}$: a polyfluoroalkyl group or polyfluoroether group having 1 to 6 carbon atoms) and compounds having constituting units derived from the (meth)acrylates are preferred, and (meth)acrylates represented by the structural formula $CH_2=C(R^2)-COO(CH_2)_2-R^{f2}$ ($R^2$: a hydrogen atom or methyl group, $R^{f2}$: a polyfluoroalkyl group having six carbon atoms) and compounds having constituting units derived from the (meth)acrylates are more preferred. In the case where a release layer is provided by a method other than coating, for example, by lamination, it is preferred that the release layer be formed with a polymethylpentene resin.

In the case where a release layer is provided by coating, in a step of molding an optical device by using the release film, the optical device is excellent in the light extraction performance because the release layer is transferred on the molded article surface. Also, in a step of manufacturing the optical device, there is a feature that such a molded article can be manufactured efficiently.

By performing biaxial stretching by the method as described above, it is possible to increase the thermal shrinkability, heat resistance, and strength, and also, by providing a release layer in a post-step, it is possible to exert excellent performance as a release film.

Next, the method for manufacturing a molded article by employing the release film according to the present embodiment will be described.

The release film according to the present embodiment is useful for a thermal processing step of electronic components and the like. The thermal processing step of electronic components and the like herein refers to a step for performing adhesion, molding, curing and the like by using heat at the time of sealing a semiconductor, such as an IC chip and an LED, at the time of molding processing in manufacturing a multi-layer printed wiring board, at the time of lamination thermal pressing, at the time of adhesion of a cover lay in manufacturing a printed wiring board, at the time of molding processing of a reflector resin into a leadframe, and the like.

In these steps, energy required for adhesion, molding, curing and the like is supplied as heat usually via a mold. Herein, between a heated mold and a molding material (resin for adhesion, molding, curing and the like used for thermal molding process of electronic components, other substrate resins and the like), a release film is allowed to intervene. At this time, in order to prevent the mold from coming into direct contact with the molding material and to prevent the mold from being contaminated by the resin, the release film according to the present embodiment is useful.

Then, in the case where the release film according to the present embodiment contains a crosslinked polyolefin resin, even if the processing temperature is higher than the melting point of the polyolefin resin which is not crosslinked, a problem such as perforation will not occur, and the function of a release film which has flexibility and is excellent in the mold reproducibility is easily exerted.

In the case of thermal processing by employing a mold, it is required that a release film adhere to the mold without any clearance and the mold shape be molded with good reproducibility. In order to transfer the shape of the mold, it is required that the release film have sufficient elongation and the film be not perforated to the corners of the mold. In order to exert this performance in thermal processing at a high temperature, it is needed that the release film sufficiently have flexibility and be not perforated partially even if the resin melts. A method for facilitating achieving this environment includes crosslinking of a polyolefin resin, and by crosslinking, it is possible to use a release film in thermal molding under a condition in which the temperature is higher than the melting point of the polyolefin resin which is not crosslinked.

Examples of use of the release film according to the present embodiment include, as already described, a step for sealing a semiconductor such as an IC chip and an LED chip, a lamination step in a multilayer printed wiring board, and a cover lay adhesion step in a flexible wiring board, and examples of the particularly preferred use include, but is not particularly limited to, use for a step for compression sealing LED chips. In the step for compression sealing LED chips, the release film is temporarily fixed on a lower mold having recessed hemispherical cavities for evacuation. After the substrate on which LEDs are mounted is set downward in an upper mold, the positions of the upper and lower molds are aligned such that the LED chips are positioned on each cavity center. After a sealant resin as the molding material is poured into the cavity, the upper and lower molds are closed together and subjected to pressurization and heating to thereby conduct molding. Examples of the sealant resin include epoxy-based resins and silicone-based resins without specific limitation. As a sealant resin for high power LEDs from which heat resistance is particularly required, silicone-based resins are preferably used. In this case, it is preferred to conduct molding by pouring a liquid silicone resin precursor into the cavity and carrying out curing reaction in the mold by heating. From the viewpoint of being further excellent in the productivity, it is preferred to carry out the first curing reaction in the mold, to open the mold and peel off the release film, and then, to conduct the secondary curing reaction in an oven.

The method for manufacturing a molded article according to the present embodiment is a manufacturing method employing the release film. The method for manufacturing a molded article according to the present embodiment comprises, for example, 1) a step of fixing the release film on a mold, 2) a step of shrinking the release film on the mold to remove wrinkles of the release film, 3) a molding step of supplying a resin into the mold to thereby mold the resin, and 4) a step of peeling the release film off.

The present embodiment comprises a step of fixing the release film on a mold. Examples of the method for fixing the release film on a mold include, without limitation, a method for fixing the release film by vacuum adsorption of the circumference of the molded surface; a method for positioning a fixing pin in a mold and fixing the release film at the fixing pin; and a method for fixing the peripheral edge of the molded surface with a metal plate. These methods may be used singly, or a plurality of the methods may be used in combination.

The present embodiment comprises a step of shrinking the release film fixed on the mold to remove wrinkles of the release film. There is no limitation on the method for shrinking the film fixed on the mold, but it is particularly preferred that, by using a release film which shrinks on heating, the film, when placed on the mold, shrink by the heat from the mold to thereby remove wrinkles.

The present embodiment comprises a molding step of supplying a resin into the mold to thereby mold the resin. There is no particular limitation on the method for supplying a resin into the mold to thereby mold the resin, and examples of the molding method include compression molding, transfer molding, and injection molding. The compression molding is a method in which a molding material weighed is placed in the recess (cavity) of a heated mold, pressurized by a compression molding machine, and cured. The transfer molding is a method in which a material once heated and softened in a plunger is cured by pushing the resin through a narrow material passage (a gate, sprue, runner, or the like) into the heated cavity. The injection molding is a method in which a plastic raw material heated and melted in a molding machine is pushed into a mold by high pressure and cured. The difference between the transfer molding and the injection molding is that only one batch of the material is placed in the plunger in the latter.

The resin used for molding, on which there is no particular limitation, may be a thermoplastic resin or may be a thermosetting resin, but particularly suitably used in the present invention is a thermosetting resin. In the case where a resin which is solid at room temperature is used as the thermosetting resin, it is possible to allow the resin to have flowability by heating the resin to room temperature or higher. In the case where a resin which is liquid at room temperature is used, there is a resin which develops flowability without particularly heating, and it is also possible to develop higher flowability by slight heating. Since usually the molecular weight is low and the viscosity is low in the melted state, a thermosetting resin does not need high filling pressure, and thus is preferred. Examples of the thermosetting resin include epoxy resins, silicone resins, and acrylic resins.

In the method for manufacturing a molded article according to the present embodiment, it is possible to manufacture a molded article composed only of a resin in the mold, and it is also possible to obtain a molded article integrated with a different-type material by placing in advance a different-type material component such as a metal component or substrate component to be embedded in a resin molded article in the mold and filling the mold with the resin. Alternatively, in the method for manufacturing a molded article according to the present embodiment, it is possible to conduct temporary curing by heating in the mold and to conduct main curing with a heating device such as an oven after removal from the mold to thereby complete the curing reaction. In order to increase the productivity, the method in which temporary curing is conducted during heating in the mold is preferred.

The present embodiment may comprise a step of peeling the release film off. The release film is peeled off from the molded article and the mold.

It is preferred that the method for manufacturing a molded article according to the present embodiment comprise a step of placing a substrate on which semiconductor chips are mounted in the mold and that the semiconductor chips on the substrate be sealed with a resin in the molding step. By such a manufacturing method, semiconductor components are manufactured.

There is no limitation on the method for placing a substrate on which semiconductor chips are mounted in the mold, and examples include a method in which the substrate is fixed on the upper mold by vacuum adsorption and a method in which the substrate is fixed on the upper mold with a fixing jig. It should be noted that the substrate on which semiconductor chips are mounted may be an inorganic substrate such as a semiconductor wafer, a ceramic substrate, or a metal base substrate, or may be a resin substrate such as an epoxy resin and a fluorine resin. Additionally, examples of the mounting method include a mounting method in which semiconductor chips are fixed by employing a die attachment material and conduction is provided with wire bond and a method in which bumps are formed on the lower surface of semiconductor chips, and after the bumps are bonded to the substrate, fixing is secured with an underfill material. Examples of the semiconductor chip include chips such as memory, logic, or LEDs without specific limitation.

An example of the method for sealing the semiconductor chips on the substrate with resin include, in the case of fixing a substrate on which semiconductor chips are mounted in the upper mold, a method in which recesses (cavities) into which the shape of the sealant resin is engraved in the lower mold in alignment with the positions of the chips are provided, the upper mold and the lower mold are fitted together, and the resin is poured into the void and molded.

Specifically, a ceramic substrate on which LED chips are mounted via bumps is vacuum adsorbed on the upper mold, and a lower mold having recessed hemispherical cavities of which diameter is 2 mm in alignment with the position of each LED chip is provided. An example include a method in which a release film is set in the lower mold and temporarily fixed in the lower mold by evacuation, a liquid silicone resin is poured on the cavities, then, the upper and lower molds are closed together, and, under temporarily curing heating condition of at 120°C in the order of 5 minutes, the mold is clamped to conduct compression molding. This temporarily cured molded article, after heated in an oven heated to 150°C for further in the order of 4 hours to complete the curing reaction, is individualized to enable LED components to be manufactured. The molded article thus obtained can be suitably used as semiconductor components.

In the method for manufacturing a molded article according to the present embodiment, another preferred manufacturing method is a manufacturing method comprising a step of placing a leadframe in the mold and characterized by molding resin on the leadframe in the molding step. By such a manufacturing method, a reflector component is manufactured.

A leadframe is a metal component which supports and fixes a semiconductor chip and makes a connection with the external wiring, is a thin plate of a metallic material, and is usually supplied in a form of a hoop. There is no particular limitation on the material of leadframes, and leadframes produced by processing, such as stamping (pressing) or etching a thin plate of a copper alloy material, an iron alloy material, or other metal material of which mechanical strength, electrical conductivity, thermal conductivity, corrosion resistance, and the like are excellent are preferably used. Also, these metals may be subjected to plating treatment, and for example, in LED applications, those subjected to Ag-plating are suitably used in order to improve the light reflectivity.

Examples of the method for placing a leadframe in the mold include, but is not limited to, a method in which a hole is formed at a predetermined position and the hole is fixed on the fixing pin of the mold.

Examples of the method for molding resin include a method in which a mold in which a recess (cavity) has been formed in accordance with a predetermined pattern of the leadframe is provided, the upper mold and the lower mold are fitted so as to fix and sandwich the leadframe, and the resin is poured into the void and molded.

Examples for manufacturing an LED reflector by using the method for manufacturing a molded article according to the present embodiment are shown below. First, an upper mold into which a reflector shape is concavely engraved is provided. On the upper mold, a release film is fixed and wrinkles are removed. A leadframe which has been processed into a predetermined shape is placed in the lower mold. Additionally, a tablet obtained by tableting an epoxy resin composition containing titanium oxide particles as a reflective material is placed in the mold cylinder part. The upper mold and the lower mold are clamped, and this tablet is poured into the mold by a piston (transfer molding). Molding is conducted by heating this poured epoxy resin the mold at about 150°C for about two minutes. Then, a step in which the upper mold and the lower mold are split, and a temporarily cured article of the aforementioned epoxy resin composition is removed from the mold is exemplified. The molded article removed from the mold is mainly cured by heating at about 160°C for two hours to complete the curing reaction. By this, it is possible to obtain a leadframe molded in a complete cured article of an epoxy resin composition integrally molded with the leadframe.

The aforementioned molded article obtained by using a resin composition containing white titanium oxide particles can be suitably used as a reflector component for LEDs.

Examples

Hereinbelow, the present invention will be described referring to specific Examples and Comparative Examples. However, the present invention is not limited only to these Examples. It should be noted that evaluation methods and measurement methods used for the present examples are as follows.

<Melting point>

Measurement was conducted in the following six stages using a DSC manufactured by Perkin Elmer Inc.

1) The temperature is maintained at 0°C for one minute,
2) the temperature is increased from 0°C to 200°C at 10°C/minute,
3) the temperature is maintained at 200°C for one minute,
4) the temperature is decreased from 200°C to 0°C at 10°C/minute,
5) the temperature is maintained at 0°C for one minute, and
6) The temperature is increased from 0°C to 200°C at 10°C/minute.

The temperature at which the heat quantity peak in 6) of the aforementioned stages is maximized is defined as the melting point.

<Thermal shrinkage ratio>

In compliance with ASTM D2732, shrinking was conducted at temperatures of 110°C and 120°C for 10 minutes, and measurement was conducted in each of the MD direction (longitudinal direction) and the TD direction (transverse direction).

<Stress-strain curve measurement (S-S measurement)>

In compliance with JIS K7127, measurement of the stress-strain curve (ordinate: load (N), abscissa: elongation (%)) was conducted in each of the MD direction and the TD direction. TENSILON manufactured by Yamato Scientific Co., Ltd. was used for the measurement. Under an environment of 120°C and 50% RH, by using a release film slit into a 10 mm width, a tensile test was conducted under conditions of the sample length: 100 mm, the interval between the chucks: 20 mm, and the tension speed: 1000 mm/min. Both in the MD direction and the TD direction, the load at 50% elongation and the load at 100% elongation were determined to thereby determine the following value X.

$$X = (\text{load at } 100\% \text{ elongation}) / (\text{load at } 50\% \text{ elongation})$$

Also, the presence or absence of the yield point on the stress-strain curve was confirmed. Both in the MD direction and the TD direction, the case where the yield point was absent was determined as ○, and the case where the yield point was present was determined as X.

<Thermal shrinkage force>

In compliance with ASTM D2838, the thermal shrinkage force at 120°C was measured in the MD direction and the TD direction. The measurement was conducted continuously for five minutes, and the maximum value was used.

<Gel fraction>

Into a 150-mesh stainless metal mesh folded into a pouch form, 100 mg of a sample from which the substrate layer was peeled off was sealed, and the sample (release film) was extracted in boiling p-xylene for 12 hours to thereby determine the proportion of the insoluble portion calculated by the following expression as the gel fraction. This gel fraction was used as a measure of the degree of crosslinking of the film.

$$\text{Gel fraction (\% by mass)} = (\text{Sample mass after extraction} / \text{Sample mass before extraction}) \times 100$$

<Overmold LED molding test>

On a lower mold having 100 recessed hemispherical cavities of a diameter of 2 mm and 256 recessed hemispherical cavities of a diameter of 1 mm, heated to 120°C or 130°C, a release film was set and temporarily fixed on the lower mold by evacuation.

{Mechanical adaptability}

In the evacuation step, the case where the film conforms to the mold without wrinkles at both temperatures of 120°C and 130°C was determined as "O", the case where the film conforms to the mold without wrinkles at one of the temperatures of 120°C or 130°C was determined as "Δ", and the case where wrinkles were formed both at 120°C and 130°C was determined as "X".

{Moldability and mold releasability}

Afterward, a dummy substrate was set downward in an upper mold, and then, the positions of the upper mold and lower mold were adjusted such that the LED chips were positioned on each cavity center. In that state, after a liquid silicone resin was poured into the cavities, compression molding was conducted by clamping the mold with pressure. Subsequently, the mold was opened, and the moldability and mold releasability were confirmed in accordance with the following criteria. As the silicone resin, which was a sealant resin, KER-2500 manufactured by Shin-Etsu Chemical Co., Ltd., which was a dimethyl silicone-type silicone resin, was used.

(Moldability)

The hemispherical silicone sealant resin sealing each LED chip formed on the metal-based substrate was observed with a microscope. The case where no wrinkle was formed on any of the molded silicone sealant resin surfaces was ⊚, the case where wrinkles were formed only on 100 silicone sealant resin hemispheres was ○, the case where the number of sealant resin hemispheres on which wrinkles were formed was one or more and less than 10 was Δ, and the case where the number of sealant resin hemispheres on which wrinkles were formed was not less than 10 was X.

(Mold releasability from silicone resin)

The case where no residue of the release film remained on the molded article side and the mold was opened in the state in which the film was completely peeled off from the molded article was determined as ○. The case where the mold was opened in a state in which the release film adhered to the molded article side or the case where many residues of the release film remained was determined as X.

(Mold releasability from the mold)

When the film was peeled off from the mold after the mold was opened, the case where the film adhered to and was not be able to be removed from the mold was determined as X, and the case where the film was easily peeled off was determined as ○.

<Examples in relation to manufacture of an LED overmold components>

A lower mold having 100 recessed hemispherical cavities of a diameter of 2 mm was provided and heated to a temperature of 120°C. A release film produced as aforementioned (Example 1) was set thereon and temporarily fixed on the lower mold by evacuation, and furthermore, the peripheral edge was fixed with a metal plate. The release film shrank by heat. Next, after a metal base substrate (substrate size: 100 mm x 100 mm) on which 100 LED chips were mounted by wire bonding was set downward in an upper mold, the positions of the upper and lower molds were aligned such that the LED chips were positioned on each cavity center. Next, after a liquid silicone resin (OE-6636 manufactured by Dow Coming Toray Co., Ltd.) was poured into the cavities, the upper and lower molds were closed together, and under a heating condition of at 130°C for five minutes, compression molding was conducted by clamping the mold at a pressure of 3.0 MPa. After the mold was opened, the molded article was removed and heated in a 150°C oven for further three hours to thereby complete a molded article.

This manufacture was repeated for 100 times, and the total of 10000 hemispherical lenses were molded on 100 substrates, but no wrinkles were formed on the resin lens portions at all.

<Molding test of a heat cured reflector for LED>

An upper mold having 100 reflector-shaped recessed cavities in a size of 5 mm in length and 5 mm in width was provided and heated to a temperature of 120°C. A release film was set thereon and temporarily set on the mold by evacuation, and furthermore, the peripheral edge was fixed with a metal plate. The release film shrank by heat. Next, leadframes were set in the mold.

A liquid silicone resin (OE-6636 manufactured by Dow Corning Toray Co., Ltd.) mixed with 10% by mass of titanium oxide particles was poured, the upper and lower molds were closed together, and transfer molding was conducted under a heating condition of at 130°C for five minutes. After the mold was opened, the molded article was removed and heated in a 150°C oven for further three hours to thereby complete a molded article.

This manufacture was repeated for 100 times, and the total of 10000 reflector components were molded on 100 substrates. The state in which no wrinkle was formed on any of the reflector components was determined as ○, and the case where there were one or more resin components on which wrinkles were formed was determined as X.

<Mold releasing test of flexible printed substrates>

Using the release film, in a press structure of the following order: rubber cushion / release film / FPC / release film / rubber cushion / heating platen, pressing was conducted on a press laminating machine. In pressing, the heat platen temperature was increased to 120°C, and pressurization was conducted under a pressurization condition of 10 MPa for three minutes. Afterward, evaluation on the press samples was conducted in accordance with the following items and criteria. It should be noted that the following evaluation was in compliance with JPCA Standard (Performance Guide for Single- and Double-sided Flexible Printed Wiring Boards JPCA-DG02) of Incorporated Association Japan Electronics Packaging and Circuits Association (hereinbelow, abbreviated as JPCA), and the evaluation was conducted in accordance with items and criteria.

(Evaluation items)

Mold releasability: the mold releasability of the release film from FPC was evaluated. Specifically, in compliance with "JPCA Standard 7.5.7.1 Fixed substance on surface", the release state of the release film from FPC after CL press lamination was visually evaluated. Evaluation was conducted setting the number of samples in each evaluation to n = 100, and a film of which the number of samples in which resin residues had occurred on the FPC surface was less than 5% of the number of the evaluation samples was considered to pass the evaluation.
◎: Incidence of breakage of less than 3%
○: Incidence of breakage of not less than 3% and less than 5%
X: Incidence of breakage of not less than 5%

[Examples 1 to 18]

By using resins shown below, a release film which comprises a substrate layer comprising a core layer and skin layers formed on both sides of the core layer, and a release layer (skin layer / core layer / skin layer / release layer) was produced.

<Resin used>

LL1: ethylene-$\alpha$-olefin random copolymer (dowlex 2032 manufactured by Dow Chemical Japan Ltd., polymerized with a multi-site catalyst, $\alpha$-olefin: 1-octene, melt flow rate (230°C, 2.16 kg, hereafter the same): 2.0 g/10 min, density: 0.926 g/cm$^3$)
LL2: ethylene-$\alpha$-olefin random copolymer (UMERIT 1520F manufactured by UBE-MARUZEN POLYETHYLENE CO., LTD., melt flow rate = 2.0 g/10 min, density = 0.915 g/cm$^3$)
LL3: ethylene-$\alpha$-olefin random copolymer (MORETEC 0278G manufactured by Prime Polymer Co., Ltd., melt flow rate = 2.1 g/10 min, density = 0.939 g/cm$^3$)
LL4: ethylene-$\alpha$-olefin random copolymer (ATTANE 4203 manufactured by Dow Chemical Japan Ltd., melt flow rate = 0.8 g/10 min, density = 0.905 g/cm$^3$)
LD1: high-pressure-processed low density polyethylene (Suntech LDM2004 manufactured by Asahi Kasei Chemicals Corporation, melt flow rate = 0.4 g/10 min, density = 0.921 g/cm$^3$)
LD2: high-pressure-processed low density polyethylene (Suntech LDM2102 manufactured by Asahi Kasei Chemicals Corporation, melt flow rate = 0.2 g/10 min, density = 0.921 g/cm$^3$)
LD3: high-pressure-processed low density polyethylene (UBE polyethylene B028 manufactured by UBE-MARUZEN POLYETHYLENE CO., LTD., melt flow rate = 0.4 g/10 min, density = 0.927 g/cm$^3$)
HD1: high density polyethylene (CREOLEX QT6015 manufactured by Asahi Kasei Chemicals Corporation, melt flow rate = 1.0 g/10 min, density = 0.958 g/cm$^3$)
HD2: high density polyethylene (Suntech HDS3600 manufactured by Asahi Kasei Chemicals Corporation, melt flow rate = 1.0 g/10 min, density = 0.954 g/cm$^3$)
HD3: high density polyethylene (Suntech HDJ240 manufactured by Asahi Kasei Chemicals Corporation, melt flow rate = 5.5 g/10 min, density = 0.966 g/cm$^3$)
HD4: high density polyethylene (Suntech HDS160S manufactured by Asahi Kasei Chemicals Corporation, melt flow rate = 0.8 g/10 min, density = 0.962 g/cm$^3$)
TPO: reactor TPO (TPOE-2900H manufactured by Prime Polymer Co., Ltd., melt flow rate = 2.5 g/10 min)
EBC: ethylene-1-butene copolymer (TAFMER A4085S manufactured by Mitsui Chemicals, Inc., melt flow rate = 3.6 g/10 min, density = 0.88 g/cm$^3$)
Coat agent 1: fluorine-based coating agent, SFCOAT SR-4000A (manufactured by AGC Seimi Chemical Co., Ltd.)
Coat agent 2: fluorine-based surfactant, Novec FC-740 (manufactured by Sumitomo 3M Limited)
Coat agent 3: TOP NOTCH COAT (organosiloxane containing a silane coupling agent) TN-1000 (manufactured by JSP Company Limited)
Coat agent 4: perfluoro polyether-based coat agent
Coat agent 5: fluorine-based coating agent, RBX-HCl (manufactured by NEOS COMPANY LIMITED)
Coat agent 6: silicone coating agent, KP-86 (manufactured by Shin-Etsu Chemical Co., Ltd.)
Coat agent 7: a compound having a constituent unit derived from a methacrylate represented by the structural

formula $CH_2=C(CH_3)-COO(CH_2)_2-C_6F_{13}$
Coat agent 8: fluorine-based coating agent, SFCOAT UT-B200A (manufactured by AGC Seimi Chemical Co., Ltd.)
Coat agent 9: fluorine-based coating agent, SFCOAT UT-DPN72A (manufactured by AGC Seimi Chemical Co., Ltd.)
Coat agent 10: fluorine-based coating agent, Obbligato PS305R (manufactured by AGC COAT-TECH Co., Ltd.)
Coat agent 11: fluorine-based coating agent, Obbligato PS308R (manufactured by AGC COAT-TECH Co., Ltd.)
PMP film: Opulent X-44B (thickness 25 μm) (manufactured by Mitsui Chemicals Tohcello.Inc.)

Each resin was used in the combination and mixing ratio (mass ratio) shown in Tables 1 and 2, melt extruded using two extruders via two types of three-layer circular patterned dice in a layer arrangement of skin (15%) / core (70%) / skin (15%) (the proportion of layer thickness in the parentheses) into a tubular form, and quenched using a water-cooling ring to thereby obtain tubular whole cloth for stretching. Crosslinking treatment was conducted by irradiating the whole cloth for stretching obtained with electron rays accelerated at an accelerating voltage of 2000 kV at an irradiation dose shown in Tables 1 and 2. Subsequently, while radiation-heated with an infra heater, the whole cloth for stretching was passed between two pairs of nip rolls. The whole cloth for stretching was stretched by injecting air into the whole cloth depending on the speed ratio between the two pairs of the nip rolls, and the film formed by stretching was cooled by subjecting bubbles to cool wind with an air ring. Afterward, the film was folded to obtain a substrate layer comprising a skin layer /a core layer (inner layer) / a skin layer. The mixing ratios of the resin forming each layer, the total thickness of the substrate layer, and irradiation doses were described in Tables 1 and 2. Afterward, as the post step, a release layer was formed by coating the coat agents shown in Tables 1 and 2 to thereby obtain a release film. Evaluation results of the release films obtained and molded articles molded by using the release films are shown in Tables 1 and 2.

[Table 1]

| | Example 1 | Example 2 | Example 3 | Example 4 | Example 5 | Example 6 | Example 7 | Example 8 | Example 9 |
|---|---|---|---|---|---|---|---|---|---|
| Substrate layer (skin) Substrate layer | LL1+LD1 (75/25) | LL2+LD1 (75/25) | HD1 | HD2 | HD3+HD4 (50/50) | LL3 | LL4 | HD3+HD4 (50/50) | HD3+HD4 (50/50) |
| Substrate layer (core) | LL1+LD1 (73/27) | LL3+LD2 (73/27) | LL3+LD2 (80/20) | LL3+LD2 (80/20) | HD4+TPO +EBC (45/45/10) | HD4+TPO +EBC (45/45/10) | HD4+TPO +EBC (45/45/10) | HD4+TPO +EBC (45/45/10) | HD4+TPO +EBC (45/45/10) |
| Release layer | Coat agent 1 | Coat agent 1 | Coat agent 1 | Coat agent 1 | Coat agent 1 | Coat agent 1 | Coat agent 1 | Coat agent 2 | Coat agent 3 |
| Thickness of substrate layer ($\mu$m) | 20 | 20 | 20 | 20 | 20 | 20 | 20 | 20 | 20 |
| Radiation dose (kGy) | 70 | 70 | 60 | 60 | 120 | 100 | 100 | 120 | 120 |
| Gel fraction of substrate layer (%) | 25 | 27 | 46 | 35 | 32 | 27 | 27 | 32 | 32 |
| Melting point of substrate layer (°C) | 120 | 123 | 127 | 125 | 130 | 127 | 125 | 130 | 130 |
| Thermal shrinkage ratio at 110°C (%) MD/TD | 17/22 | 10/12 | 5/6 | 5/6 | 3/3 | 10/10 | 14/15 | 3/3 | 3/3 |
| Thermal shrinkage ratio at 120°C (%) MD/TD | 54/60 | 16/30 | 25/25 | 25/25 | 5/5 | 20/20 | 25/25 | 5/5 | 5/5 |
| Thermal shrinkage force at 120°C (N/cm) MD/TD | 0.20/0.20 | 0.15/0.25 | 0.2/0.2 | 0.2/0.2 | 0.2/0.2 | 0.3/0.3 | 0.3/0.3 | 0.2/0.2 | 0.2/0.2 |
| S-S measurement (load at 100% elongation / load at 50% elongation) MD/TD | 1.6/2.1 | 1.6/2.1 | 1.6/2.0 | 1.7/2.1 | 1.9/1.8 | 1.7/1.8 | 1.7/1.8 | 1.9/1.8 | 1.9/1.8 |
| S-S measurement Yield point yes=×, no=○ | ○ | ○ | ○ | ○ | ○ | ○ | ○ | ○ | ○ |

(continued)

| | Example 1 | Example 2 | Example 3 | Example 4 | Example 5 | Example 6 | Example 7 | Example 8 | Example 9 |
|---|---|---|---|---|---|---|---|---|---|
| Overmold LED molding test | | | | | | | | | |
| Mechanical adaptability | Δ | Δ | ○ | ○ | ○ | ○ | ○ | ○ | ○ |
| Moldability | ○ | ○ | ○ | ○ | ○ | ○ | ○ | ○ | ○ |
| Mold releasability from silicone | ○ | ○ | ○ | ○ | ○ | ○ | ○ | ○ | ○ |
| Mold releasability from the mold | ○ | ○ | ○ | ○ | ○ | ○ | ○ | ○ | ○ |
| Molding test of a heat cured reflector for LEDs | | | | | | | | | |
| Moldability | ○ | ○ | ○ | ○ | ○ | ○ | ○ | ○ | ○ |
| Mold releasing test of flexible printed substrates | | | | | | | | | |
| Mold releasability | ○ | ○ | ○ | ○ | ○ | ○ | ○ | ○ | ○ |

[Table 2]

| | Example 10 | Example 11 | Example 12 | Example 13 | Example 14 | Example 15 | Example 16 | Example 17 | Example 18 |
|---|---|---|---|---|---|---|---|---|---|
| Substrate layer (skin) | HD3+HD4 (50/50) | HD3+HD4 (50/50) | HD3+HD4 (50/50) | HD3+HD4 (50/50) | HD3+HD4 (50/50) | HD3+HD4 (50/50) | HD3+HD4 (50/50) | HD3+HD4 (50/50) | HD3+HD4 (50/50) |
| Substrate layer (core) | HD4+TPO +EBC (45/45/10) | HD4+TPO +EBC (45/45/10) | HD4+TPO +EBC (45/45/10) | HD4+TPO +EBC (45/45/10) | HD4+TPO +EBC (45/45/10) | HD4+TPO +EBC (45/45/10) | HD4+TPO +EBC (45/45/10) | HD4+TPO +EBC (45/45/10) | HD4+TPO +EBC (45/45/10) |
| Release layer | Coat agent 4 | Coat agent 5 | Coat agent 6 | Coat agent 7 | Coat agent 8 | Coat agent 9 | Coat agent 10 | Coat agent 11 | Laminate of PMP film |
| Thickness of substrate layer ($\mu$m) | 20 | 20 | 20 | 20 | 20 | 20 | 20 | 20 | 20 |
| Radiation dose (kGy) | 120 | 120 | 120 | 120 | 120 | 120 | 120 | 120 | 120 |
| Gel fraction of substrate layer (%) | 32 | 32 | 32 | 32 | 32 | 32 | 32 | 32 | 32 |
| Melting point of substrate layer (°C) | 130 | 130 | 130 | 130 | 130 | 130 | 130 | 130 | 130 |
| Thermal shrinkage ratio at 110°C (%) MD/TD | 3/3 | 3/3 | 3/3 | 3/3 | 3/3 | 3/3 | 3/3 | 3/3 | 3/3 |
| Thermal shrinkage ratio at 120°C (%) MD/TD | 5/5 | 5/5 | 5/5 | 5/5 | 5/5 | 5/5 | 5/5 | 5/5 | 5/5 |
| Thermal shrinkage force at 120°C (N/cm) MD/TD | 0.2/0.2 | 0.2/0.2 | 0.2/0.2 | 0.2/0.2 | 0.2/0.2 | 0.2/0.2 | 0.2/0.2 | 0.2/0.2 | 0.2/0.2 |
| S-S measurement (load at 100% elongation / load at 50% elongation) MD/TD | 1.9/1.8 | 1.9/1.8 | 1.9/1.8 | 1.9/1.8 | 1.9/1.8 | 1.9/1.8 | 1.9/1.8 | 1.9/1.8 | 1.9/1.8 |
| S-S measurement Yield point yes=X, no=○ | ○ | ○ | ○ | ○ | ○ | ○ | ○ | ○ | ○ |
| Overmold LED molding test | | | | | | | | | |

EP 3 040 174 A1

(continued)

| | Example 10 | Example 11 | Example 12 | Example 13 | Example 14 | Example 15 | Example 16 | Example 17 | Example 18 |
|---|---|---|---|---|---|---|---|---|---|
| Mechanical adaptability | ○ | ○ | ○ | ○ | ○ | ○ | ○ | ○ | ○ |
| Moldability | ○ | ○ | ○ | ◎ | ○ | ◎ | ◎ | ◎ | ○ |
| Mold releasability from silicone | ○ | ○ | ○ | ○ | ○ | ○ | ○ | ○ | ○ |
| Mold releasability from the mold | ○ | ○ | ○ | ○ | ○ | ○ | ○ | ○ | ○ |
| Molding test of a heat cured reflector for LEDs | | | | | | | | | |
| Moldability | ○ | ○ | ○ | ○ | ○ | ○ | ○ | ○ | ○ |
| Mold releasing test of flexible printed substrates | | | | | | | | | |
| Mold releasability | ○ | ○ | ○ | ○ | ○ | ○ | ○ | ○ | ○ |

[Comparative Example 1]

Evaluation similar to Examples was conducted by using an uncrosslinked ethylene-tetrafluoroethylene copolymer (ETFE) film (manufactured by ASAHI GLASS CO., LTD., LM-50) as a single-layer substrate layer. The results are shown in Table 3.

[Comparative Example 2]

Evaluation similar to Examples was conducted by using an uncrosslinked 4-methyl-1-pentene film (manufactured by Mitsui Chemicals Tohcello.Inc., X44B) as a single-layer substrate layer. The results are shown in Table 3.

[Comparative Example 3]

Evaluation similar to Examples was conducted by fluorine-coating an unstretched polyethylene film as a single-layer substrate layer. The results are shown in Table 3.

[Comparative Example 4]

Evaluation similar to Examples was conducted by using an unstretched propylene film (CPP film) as a single-layer substrate layer. The results are shown in Table 3.

[Table 3]

|  | Comparative Example 1 | Comparative Example 2 | Comparative Example 3 | Comparative Example 4 |
|---|---|---|---|---|
| Substrate layer | ETFE film LM-50 | TPX film X44B | Unstretched polyethylene film | CPP film |
| Release layer | - | - | Coat agent 1 | - |
| Thickness of substrate layer ($\mu$m) | 50 | 50 | 95 | 60 |
| Gel fraction of substrate layer (%) | - | - | - | - |
| Melting point of substrate layer (°C) | 230 | 230 | 120 | 160 |
| Thermal shrinkage ratio at 110°C (%) MD/TD | 0/0 | 0/0 | 2/0 | 0/0 |
| Thermal shrinkage ratio at 120°C (%) MD/TD | 2/1 | 0/0 | 8/-1 | 0/0 |
| Thermal shrinkage force at 120°C (N/cm) MD/TD | 0.16/0.02 | 0.06/0.04 | 0/0 | 0.04/0 |
| S-S measurement (load at 100% elongation /load at 50% elongation) MD/TD | 1.3/1.3 | 1.0/1.0 | 1.1/1.1 | 1.0/1.0 |
| S-S measurement Yield point yes= ×, no=○ | ○ | × | ○ | × |
| Overmold LED molding test |  |  |  |  |
| Mechanical adaptability | × | × | × | × |
| Moldability | Δ | Δ | × | × |
| Mold releasability from silicone | ○ | ○ | ○ | ○ |
| Mold releasability from the mold | ○ | ○ | ○ | ○ |
| molding test of a heat cured reflector for LEDs |  |  |  |  |
| Moldability | × | × | × | × |

(continued)

|  | Comparative Example 1 | Comparative Example 2 | Comparative Example 3 | Comparative Example 4 |
|---|---|---|---|---|
| Substrate layer | ETFE film LM-50 | TPX film X44B | Unstretched polyethylene film | CPP film |
| Mold releasing test of flexible printed substrates | | | | |
| Mold releasability | ○ | ○ | × | × |

From the results of Tables 1 and 2, it was confirmed that silicone packages in good forms can be obtained because the release films obtained in Examples 1 to 18 have moderate thermal shrinkability and accurately conform to the mold in molding. Meanwhile, from the results of Table 3, it was confirmed that it is not possible to obtain moderate elongation in molding from the release films obtained in Comparative Examples 1 to 4 and that packages on which wrinkles are formed are provided.

Industrial Applicability

By the release film according to the present invention, it is possible to exert excellent heat resistance, flexibility, and mold releasability in the thermal molding step. Therefore, the film is useful particularly in a step of sealing a semiconductor such as IC chips and LEDs in electronic components, a molding processing step in manufacturing a multilayer printed wiring board, a lamination thermal pressing step, and furthermore, in thermal processing of electronic components such as a cover lay adhesion step in manufacturing a printed wiring board. Also, the film is useful for molding processing of resin into a leadframe.

**Claims**

1. A release film, wherein each of thermal shrinkage ratios in an MD direction and a TD direction at 120°C is not less than 5%.

2. The release film according to claim 1, wherein each of thermal shrinkage ratios in an MD direction and a TD direction at 110°C is not less than 2%.

3. The release film according to claim 1 or 2, comprising a release layer and a substrate layer, wherein
the substrate layer comprises a polyolefin resin, and
a melting point of the substrate layer measured by DSC is from 128 to 210°C.

4. The release film according to claim 3, wherein
the polyolefin resin of the substrate layer is crosslinked;
in each of stress-strain curves in an MD direction and a TD direction of the release film at 120°C, there is no yield point, and a ratio of a load B at 100% elongation to a load A at 50% elongation, B/A, is not less than 1.5; and
each of thermal shrinkage forces in an MD direction and a TD direction at 120°C is not more than 0.40 N/cm.

5. The release film according to claim 3 or 4, wherein the release layer comprises a fluorine-based compound.

6. The release film according to any one of claims 3 to 5, wherein the polyolefin resin of the substrate layer is crosslinked by ionizing radiation.

7. A method for manufacturing a molded article, comprising:

a step of fixing the release film according to any one of claims 1 to 6 on a mold,
a step of shrinking the release film on the mold to remove wrinkles of the release film,
a molding step of supplying a resin into the mold to mold the resin, and
a step of peeling the release film off.

8. The method for manufacturing a molded article according to claim 7, further comprising a step of placing a substrate on which a semiconductor chip is mounted in the mold,
wherein the semiconductor chip is sealed with the resin in the molding step.

9. The method for manufacturing a molded article according to claim 7, further comprising a step of placing a leadframe in the mold,
wherein the resin is molded into the leadframe in the molding step.

10. A semiconductor component manufactured by the method for manufacturing a molded article according to claim 8.

11. A reflector component manufactured by the method for manufacturing a molded article according to claim 9.

## INTERNATIONAL SEARCH REPORT

| International application No. |
| --- |
| PCT/JP2014/072176 |

### A. CLASSIFICATION OF SUBJECT MATTER
*B29C33/68*(2006.01)i, *B29C55/28*(2006.01)i, *B32B27/00*(2006.01)i, *B32B27/32*(2006.01)i, *C08J7/00*(2006.01)i

According to International Patent Classification (IPC) or to both national classification and IPC

### B. FIELDS SEARCHED

Minimum documentation searched (classification system followed by classification symbols)
B29C33/68, B29C55/28, B32B27/00, B32B27/32, C08J7/00

Documentation searched other than minimum documentation to the extent that such documents are included in the fields searched
Jitsuyo Shinan Koho          1922–1996     Jitsuyo Shinan Toroku Koho    1996–2014
Kokai Jitsuyo Shinan Koho    1971–2014     Toroku Jitsuyo Shinan Koho    1994–2014

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| P,A | JP 2013-189493 A  (Asahi Kasei Chemicals Corp.), 26 September 2013 (26.09.2013), entire text (Family: none) | 1-11 |
| A | WO 2008/090871 A1  (Tohcello Co., Ltd.), 31 July 2008 (31.07.2008), entire text & JP 5047994 B | 1-11 |
| A | JP 2005-280125 A  (Toray Industries, Inc.), 13 October 2005 (13.10.2005), entire text (Family: none) | 1-11 |

☒ Further documents are listed in the continuation of Box C.          ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 November, 2014 (19.11.14) | 02 December, 2014 (02.12.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/072176

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2004/087401 A1  (Mitsui Chemicals, Inc.),<br>14 October 2004 (14.10.2004),<br>entire text<br>& JP 4489699 B          & US 2006/0105190 A1<br>& EP 1616689 A1          & KR 10-2005-0018805 A<br>& CN 1697728 A | 1-11 |
| A | JP 5-177704 A  (Mitsubishi Paper Mills Ltd.),<br>20 July 1993 (20.07.1993),<br>entire text<br>(Family: none) | 1-11 |

Form PCT/ISA/210 (continuation of second sheet) (July 2009)

**EP 3 040 174 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001206913 A
- JP 2006070252 A
- JP 2012066447 A